# EUROPÄISCHE PATENTSCHRIFT

(11) **EP 1 987 614 B1**
(45) Veröffentlichungstag und Bekanntmachung des Hinweises auf die Patenterteilung: **29.05.2013**
(21) Anmeldenummer: 06707190.2
(22) Anmeldetag: 22.02.2006
(51) Int. Cl.: H04J 3/06

(54) **VERFAHREN UND EINRICHTUNGEN ZUM ÜBERMITTELN VON SENDEZEIT- ODER EMPFANGSZEITINFORMATION EINER GESENDETEN ODER EMPFANGENEN NACHRICHT**
METHODS AND DEVICES FOR SENDING TRANSMISSION-TIME OR RECEPTION-TIME INFORMATION FOR A TRANSMITTED OR RECEIVED MESSAGE
PROCEDES ET DISPOSITIFS POUR LA TRANSMISSION D'INFORMATIONS D'HEURES D'ENVOI OU DE RECEPTION D'UN MESSAGE ENVOYÉ OU RECU

(43) Veröffentlichungstag der Anmeldung: 05.11.2008
(73) Patentinhaber: Siemens Enterprise Communications GmbH & Co. KG, 81379 München (DE)
(72) Erfinder: GOETZ, Franz-Josef, 91180 Heideck (DE); KNOERZER, Rolf, 82335 Berg-Kempfenhausen (DE); SCHUELER, Stephan, 58454 Witten (DE)
(74) Vertreter: Fritzsche, Thomas
(86) Internationale Anmeldenummer: PCT/EP2006/001629
(87) Internationale Veröffentlichungsnummer: WO 2007/098775

(56) Entgegenhaltungen:
- WO-A-01/88746
- US-A1- 2003 235 216
- US-B1- 6 208 665
- HANS WEIBEL, DOMINIC BÉCHAZ: "Implementation and Performance of Time Stamping Techniques" 2004 CONFERENCE ON IEEE 1588, [Online] 28. September 2004 (2004-09-28), XP002400351 Zurich Gefunden im Internet: URL:http://ieee1588.nist.gov/Presentation% 20PDFs/6%20_Implem_Weibel.pdf#search=%22%2 0%22time%20stamping%22%20site%3Ahttp%3A%2F %2Fieee1588.nist.gov%2F%22> [gefunden am 2006-09-25]
- HOLLER R ET AL: "Embedded synutc and IEEE 1588 clock synchronization for industrial ethernet" EMERGING TECHNOLOGIES AND FACTORY AUTOMATION, 2003. PROCEEDINGS. ETFA '03. IEEE CONFERENCE SEPT. 16-19, 2003, PISCATAWAY, NJ, USA,IEEE, Bd. 1, 16. September 2003 (2003-09-16), Seiten 422-426, XP010670459 ISBN: 0-7803-7937-3
- SIKORA A: "ECHTZEIT UEBERS ETHERNET SYNCHRONISATION MIT DEM IEEE-1588-STANDARD" ELEKTRONIK, WEKA FACHZEITSCHRIFTENVERLAG, POING, DE, Bd. 52, Nr. 9, 29. April 2003 (2003-04-29), Seiten 46-48,50, XP001160058 ISSN: 0013-5658
- GRAMANN T ET AL: "PRECISION TIME PROTOCOL IEEE 1588 IN DER PRAXIS ZEITSYNCHRONISATION IM SUBMIKROSEKUNDENBEREICH" ELEKTRONIK, WEKA FACHZEITSCHRIFTENVERLAG, POING, DE, Bd. 52, Nr. 24, 25. November 2003 (2003-11-25), Seiten 86-91,93, XP001177441 ISSN: 0013-5658
- STEPHAN SCHÜLER: "IEEE1588 Security Extensions: Requirements and proposed solutions" 2005 CONFERENCE IEEE 1588, [Online] 29. September 2005 (2005-09-29), XP002400352 Gefunden im Internet: URL:http://ieee1588.nist.gov/IEEE%201588%2 0Agenda/s_8_IEEE1588_security_schueler_290 905.pdf> [gefunden am 2006-09-25]
- JOHN EDISION: "IEEE-1588 STANDARD FOR A PRECISION CLOCK SYNCHRONIZATION PROTOCOL FOR NETWORKED MEASUREMENT AND CONTROL SYSTEMS" TUTORIAL ON IEEE 1588 FROM AGILENT TECHNOLOGIES, [Online] 10. Oktober 2005 (2005-10-10), XP002400353 Gefunden im Internet: URL:http://ieee1588.nist.gov/tutorial-basi c.pdf#search=%22transmission%20time%20poin t%20site%3Ahttp%3A%2F%2Fieee1588.nist.gov% 2F%22> [gefunden am 2006-09-25]

## Beschreibung

In verteilten Kommunikationsnetzen, insbesondere paketorientierten Kommunikationsnetzen, wird in zunehmendem Maße eine präzise zeitliche Synchronisierung der Komponenten der Kommunikationsnetze gefordert. Hierzu wird überwiegend ein "Precision Time Protocol" - in der Fachwelt aus als PTP bekannt - für paketorientierte Kommunikationsnetze eingesetzt, mit dem Echtzeituhren von räumlich verteilten Komponenten des Kommunikationsnetzes, insbesondere eines Ethernet, synchronisiert werden können. Das bekannte PTP ist in dem IEEE- Standard 1588 standardisiert, das beispielsweise in der Druckschrift 2004 Conference on IEEE 1588, September 28, 2004, "Implementation and Performance of Time Stamping Techniques," Hans Weibel, Dominic Béchaz, XP002400351, 15 Seiten (29 Folien), beschrieben ist.

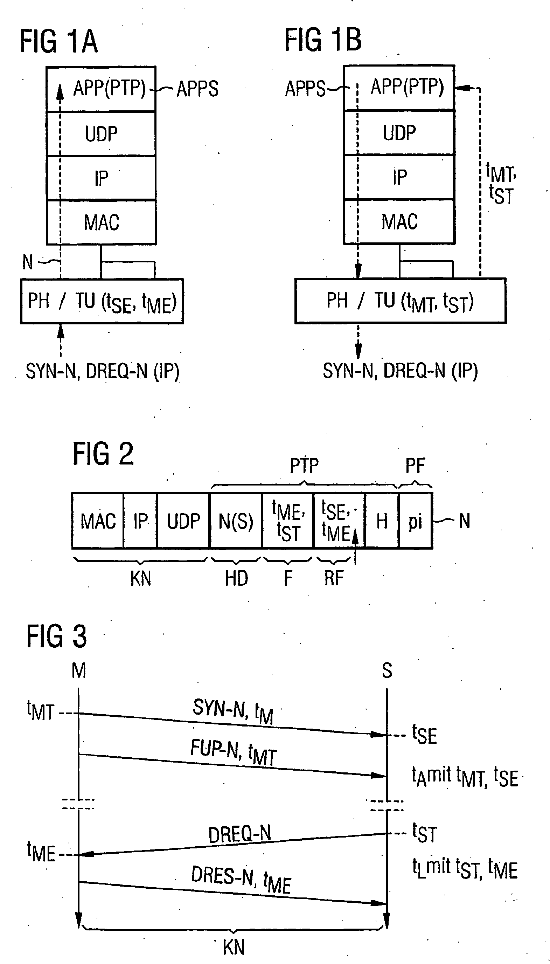

Gemäß diesem Standard ist in einer der Komponenten des Kommunikationsnetzes ein Master definiert - in Figur 3 durch eine senkrechte mit M bezeichnete Gerade dargestellt -, von dem in regelmäßigen Zeitabständen eine Synchronisationsnachricht SYN-N über ein Kommunikationsnetz KN an dessen Slaves bzw. Komponenten bzw. Einrichtungen bzw. Endgeräte gesendet wird - in Figur 3 durch eine senkrechte mit S bezeichnete Gerade dargestellt. In dieser Synchronisationsnachricht SYN-N ist die aktuelle Zeit t_{M} der im Master M angeordneten Uhr angegeben. Da das Auslesen der Uhr, die Verarbeitung des Protokolls, das Durchlaufen der Protokollstacks und das Aussenden der Daten über einen Ethernet-Controller eine undefinierte Zeit benötigt, ist die Zeitinformation in der Synchronisationsnachricht SYN-N beim Verlassen des Masters M bereits veraltet. Deshalb wird so nah wie möglich an der physikalischen Schnittstelle - idealerweise direkt am Kommunikationsnetzanschluss der Hardware - der tatsächliche Sendezeitpunkt der Synchronisationsnachricht gemessen und diese als Sendezeitinformation t_{MT} mittels einer Folgenachricht FUP-N, der Follow Up Message, an den Slave S gesendet. Im Standard und in der Fachwelt ist diese Sendezeitinformation t_{MT} als Time Stamp bekannt. Die empfangenden Einrichtungen bzw. Endgeräte, d.h. die Slaves S stellen den Empfangszeitpunkt fest und bilden eine Empfangszeitinformation t_{SE}. Die Empfangszeitinformation t_{SE} gibt den Zeitpunkt an, an dem die Synchronisations-nachricht SYN-N von dem Übertragungsmedium übernommen bzw. empfangen wurde, wobei der Empfangszeitpunkt in der physikalischen Schicht bzw. schaltungstechnischnah ermittelt wird. Anschließend wird aus der übermittelten Sendezeitinformation t_{MT} und der ermittelten Empfangszeitinformation t_{SE} im Slave S die Abweichung t_{A} bzw. der Offset ihrer Echtzeituhren ermittelt. Die Uhr der Slaves S wird entsprechend der ermittelten Abweichung t_{A} korrigiert, d.h. mit der Uhr des Master M synchronisiert.

Hätte die Übertragungsstrecke keine Verzögerung, dann wären nun beide Uhren bereits synchron. Eine zweite Phase des Synchronisationsvorgangs bestimmt die Verzögerungszeit zwischen den Slaves S und dem Master M, die Laufzeitmessung. Hierzu sendet nach IEEE- Standard 1588 der Slave S eine sogenannte "Delay Request" bzw. Anforderungsnachricht DREQ-N an den Master M und ermittelt hierzu wieder den exakten Sendezeitpunkt t_{ST}. Der Master M generiert eine Empfangszeitinformation t_{ME} beim Empfang der Anforderungsnachricht DREQ-N und sendet die Empfangszeitinformation t_{ME} in einer "Delay Response" bzw. Antwortnachricht DRES-N an den Slave S zurück. Aus der lokalen Sende- und der übermittelten Empfangszeitinformation t_{ST}, t_{ME} bzw. der beiden Zeitstempel ermittelt der Slave S die Verzögerungszeit bzw. die Laufzeit t_{L} im Kommunikationsnetz KN zwischen Slave S und Master M. Die Laufzeitmessung erfolgt unregelmäßig und in größeren Zeitintervallen als eine Messung zur Synchronisation der beiden Uhren.

Für die Ermittlung der Empfangszeitpunkte von empfangenen synchronisationsrelevanten Nachrichten oder der Sendezeitpunkte von zu sendenden synchronisationsrelevanten Nachrichten ist in den Einrichtungen eine Time Stamp Einheit vorgesehen, die.die Zeitpunkte bzw. Time Stamps ermittelt. Die Ermittlung der Abweichungen t_{A} der Echtzeituhren und der Laufzeiten tL wird mit Hilfe des PTP (Precision Time Protocol)durchgeführt, wobei das PTP in den Applikationsschichten der Einrichtungen bzw. Endgeräte realisiert ist. Da die Zeitpunkte bzw. die Time Stamps in der physikalisch nahen Schicht gebildet werden, um möglichst genau die Abweichungen tA der Uhren und der Laufzeit tL im Kommunikationsnetz bestimmen zu können, werden die Zeitpunkte bzw. die Zeitinformation in Speichern der physikalischen Schicht zwischengespeichert, bis sie vom PTP in der Applikationsschicht abgerufen werden. Dies bedeutet in der Praxis, dass mehrere Zeitinformationen für mehrere Nachrichten und mehreren PTP in der physikalischen Schicht für mehrere Applikationen in den Speichern gespeichert werden müssen. Des Weiteren muss in den Speichern nicht nur die Zeitinformation sondern auch eine Information gespeichert werden, mit der die Zuordnung der Zeitinformation zur jeweiligen Nachricht möglich ist, damit die jeweiligen PTP in der Applikationsschicht gezielt die Zeitinformation aus den Speichern abrufen können.

Für eine Realisierung des PTP gemäß dem IEEE- 1588 Standard sind folglich umfangreiche Speicher sowie umfangreiche schaltungs- und programmtechnisch zu realisierende Protokolle für den Abruf der Zeitinformationen aus den Speichern in den schaltungstechnischen Schichten bzw. in der Hardwareschicht der Einrichtung bzw. Endgeräten eines Kommunikationsnetzes wie beispielsweise einem Intranet oder Internet erforderlich. Weiterhin ist in WO 01/88746 A1 ein System zum Senden einer Time Stamp Einfügung in einem Hardware Time Stamp System für paketierte Datennetzwerke offenbart.

Der Erfindung liegt die Aufgabe zugrunde, die Realisierung von PTP gemäß dem IEEE- Standard 1588 oder anderen Protokollen mit Time Stamps zu verbessern. Die Aufgabe wird durch die Merkmale der Ansprüche 1, 7 und 15 gelöst.

Ein wesentlicher Vorteil der Erfindung ist darin zu sehen, dass in der schaltungstechnisch realisierten, physikalischen Schicht die Speicher für die Speicherung der Empfangszeitinformation sowie der applikationsspezifischen Information und die Protokolle für den Abruf der gespeicherten synchronisationsrelevanten Nachrichten nicht mehr erforderlich sind und der schaltungstechnische bzw. der wirtschaftliche Aufwand für die Realisierung der Synchronisation der Uhren und der Bestimmung der Kommunikationsnetz- bzw. Übertragungsmedium- Laufzeiten erheblich reduziert wird.

vorteilhafte Weiterbildungen der erfindungsgemäßen Verfahren sowie erfindungsgemäße Ausgestaltungen einer Einrichtung und einer Time Stamp Einheit sind den weiteren Patentansprüchen zu entnehmen.

Im Folgenden wird die Erfindung basierend auf dem in Figur 3 beschriebenen bekannten Verfahren durch drei weitere zeichnerische Darstellung näher erläutert. Dabei zeigen
- Figur 1A: das Weiterleiten einer Empfangszeitinformation von physikalischen Schicht zu einer Applikationsschicht,
- Figur 1B: das Weiterleiten einer Sendezeitinformation von physikalischen Schicht zu einer Applikationsschicht, und
- Figur 2: den Aufbau einer synchronisationsrelevanten Nachricht.

Für das Ausführungsbeispiel sei die in Figur 1A und Figur 1B dargestellte Struktur hinsichtlich der Schichten für eine Einrichtung bzw. ein Endgerät bzw. einen Master M oder Slave S angenommen, die an ein als Internet IN bzw. Ethernet realisiertes Kommunikationsnetzes KN abgeschlossen sind. Die den physikalischen Anschluss an das Internet IN realisierende Schicht ist die physikalische Schicht PH. Es folgen eine Mediumzugriffsschicht MAC (Medium Access Control), eine Internetprotokollschicht IP (Internet Protocol), eine Transportschicht UDP (User Datagram Protocol) und eine Applikationsschicht APPS, in der für eine Applikation APP eine Synchronisationsapplikation PTP realsiert ist - gemäß dem IEEE-Standard 1588 im weiteren mit Precision Time Protocol PTP bezeichnet. Für die Erläuterung der Erfindung wird im Wesentlichen auf physikalische Schicht PH und die Applikationschicht APPS mit dem Precision Time Protocol PTP eingegangen.

In der physikalischen Schicht PH ist für die Ermittlung der Sendezeit- und Empfangszeitpunkte von synchronisationsrelevanten Nachrichten N eine Time Stamp Einheit TU vorgesehen, wobei aus den ermittelten Sende- und Empfangszeitounkten eine Empfangszeit- und Sendezeitinformation t_{E}, t_{S} gebildet wird. Für das Ausführungsbeispiel sei weiterhin angenommen, dass die synchronisationsrelevanten Nachrichten N durch eine im IEEE- Standard 1588 angegebene Synchronisationsnachricht SYN-N, eine Folgenachricht FUP-N, eine Anforderungsnachricht DREQ-N und eine Antwortnachricht DRES-N repräsentiert sind.

Für das Ausführungsbeispiel in Figur 1A sei des weiteren angenommen, dass gemäß IEEE- Standard 1588 von dem Master M eine Synchronisationsnachricht SYN-N an den Slave S oder eine Anforderungsnachricht DREQ-N vom Slave S an den Master M gesendet wird - siehe Figur 3 -, wobei in beiden Fällen in der physikalischen Schicht PH mit Hilfe der Time Stamp Einheit TU der Empfangszeitpunkt ermittelt und eine Empfangszeitinformation t_{SE}, t_{ME} gebildet wird. Die Ermittlung des Empfangszeitpunkts wird so nah als möglich an dem Übertragungsmedium des Internet IN gemessen, um eine möglichst genaue Ermittlung der Abweichungen t_{A} der Uhren von Master M und den Slaves S sowie der Laufzeiten t_{L} von synchronisationsrelevanten Nachrichten N im Internet durchführen zu können.

In Figur 2 ist der prinzipielle Aufbau eine synchronisations-relevante Nachricht N nach einem Beispiel gemäß dem IEEE Standard 1588 dargestellt. Für die Übermittlung der Nachricht N über die Mediumzugriffsschicht MAC, die Internetprotokollschicht IP und die Transportschicht UDP ist jeweils ein Header vorgesehen - in Figur 2 durch die Bezeichnungen MAC, IP und UDP angedeutet. In dem jeweiligen Header ist eine Information eingefügt, die auf den Header der folgenden Schicht IP, UDP verweist. Hierzu sind gemäß einem Beispiel im IEEE Standard 1588 die Bytes Nr. 0 bis 41 vorgesehen. Die Informationen für das Precision Time Protocol PTP sind in dem mit PTP bezeichneten Teil der synchronisationsrelevanten Nachricht N enthalten, wobei das Precision Time Protocol PTP beispielsweise in einer Applikation APP der Applikationsschicht APPS realisiert ist. In dem Header HD des Precision Time Protocol PTP - nach einem Beispiel im Standard Byte 42 bis 78 - ist angegeben, um welche der synchronisationsrelevanten Nachrichten N es sich handelt - in der Figur 2 durch die Bezeichnung N(S) angedeutet. Dies sind beispielsweise die standardgemäße Synchronisationsnachricht SYN-N, die Folgenachricht FUP-N, die Anforderungsnachricht DREQ-N oder die Antwortnachricht DRES-N, wobei die Nachrichten eine unterschiedliche Anzahl von Bytes umfassen - gemäß dem Beispiel im Standard 90, 98 oder 154 Bytes.

Die in der physikalischen Schicht PH gebildete Empfangszeitinformation t_{SE}, t_{ME} wird nun nicht in einem Speicher der physikalischen Schicht PH für einen Abruf durch eine Applikation APP gespeichert, sondern erfindungsgemäß in die empfangene Synchronisationsnachricht SYN-N bzw. Anforderungsnachricht DREQ-N eingefügt - in Figur 2 durch die Bezeichnung t_{SE}, t_{ME} angedeutet. Hierfür wird wie in Figur 2 dargestellt ein im Beispiel des Standards freigehaltenes, für weitere Informationen reserviertes Feld RF einer synchronisationsrelevanten Nachricht N genutzt. Alternativ kann die Empfangszeitinformation t_{SE}, t_{ME} am Ende des Precision Time Protocol PTP eingefügt werden - in der Figur 2 durch einen Pfeil angedeutet. Bei einer gemäß dem Beispiel im Standard 1588 gebildeten synchronisationsrelevanten Nachricht N kann die Empfangszeitinformation t_{SE}, t_{ME} beispielsweise in die für weitere Informationen reservierten vier Bytes Nr. 78 bis 81 einer PTP- Nachricht eingefügt werden.

Des weiteren ist im Precision Time Protocol PTP gemäß dem Beispiel im Standard ein Feld F - die Bytes Nr. 86 und 90 - für Übermittlung der Empfangszeit- und Sendezeitinformation t_{ME}, t_{ST} vorgesehen. In einem weiteren standardgemäßen Prüffeld PF am Ende der synchronisationsrelevanten Nachricht N ist eine Prüfinformation pi eintragen, mit deren Hilfe in dem Master M und den Slaves S eine Überprüfung der vollständige Nachricht N durchgeführt werden kann. Standardgemäß ist dies eine CRC- Prüfinformation (Cyclic Redundancy Check). Zur Sicherstellung der Integrität wird weiterhin üblicherweise mit einem Hash-Verfahren (z.B. HMAC-SHA1 nach RFC Standard 2104) ein Hash-Wert H über das Precision Time Protocol PTP der Nachricht N mit einem geheimen Schlüssel gebildet, die dann an das Ende des Precision Time Protocol PTP der Nachricht N angefügt wird.
Weitere Prüfinformation in den Headern für die weiteren Protokollschichten MAC, IP, UDP sind nicht dargestellt.

Beim Ausführungsbeispiel sei angenommen, dass die Empfangszeitinformation t_{SE}, t_{ME} nur bis zu zwei Sekunden umfasst, da der Synchronisationsvorgang in entsprechenden Zeitabständen regelmäßig durchgeführt wird. Überschreitet die Empfangszeitinformation t_{SE}, t_{ME} hinsichtlich ihres Umfang eine Sekunde, wird nur die Zeitinformation, die nach der Sekundeninformation folgt - beispielsweise als Nanosekunden angegeben -, als Empfangszeitinformation t_{SE}, t_{ME} in die synchronisationsrelevante Nachricht N eingefügt und an die betroffene Applikation APP weitergeleitet. In der der Applikation APP zugeordneten Synchronisationsapplikation PTP wird durch die Auswertung zweier aufeinander folgenden Empfangszeitinformationen t_{SE}, t_{ME} ermittelt, ob zwischen beiden die Sekunde überschritten wurde und in Abhängigkeit vom Ergebnis der Auswertung wird entweder die aktutell übermittelte Empfangszeitinformation t_{SE}, t_{ME} nicht verändert oder um eine Sekunde erhöht, d.h. die ursprüngliche Empfangszeitinformation t_{SE}, t_{ME} wieder hergestellt.

Vor dem Weiterleiten der synchronisationsrelevanten Nachricht N an die betroffene Applikation APP in der Applikationsschicht APPS bzw. an das zugeordneten Precision Time Protocol PTP ist die Prüfinformation pi bzw. der Hash-Wert H nach einer ersten Variante zu löschen oder nach einer zweiten Variante eine Prüfinformation pi bzw. ein Hashwert H für die synchronistionsrelevante Information einschließlich der zusätzlichen Empfangszeitinformation t_{SE}, t_{ME} zu ermitteln und anstelle der übermittelten Prüfinformation pi bzw. des Hash-Wertes H in das Prüffeld PF einzufügen bzw. an die Nachricht N anzufügen. Die erste Variante ist vorteilhaft bei einer Prüfung der übermittelten synchronisationsrelevanten Information in der physikalischen Schicht PH und die zweite Variante ist vorgesehen bei einer Prüfung der synchronisationsrelevanten Information in einer der folgenden Schichten MAC, IP, UDP, APPS, wobei weitere Prüfinformationen in den Headern für die weiteren Schichten MAC, IP, UDP zu löschen oder zu aktualisieren sind, sofern die Information den Precision Time Protocols PTP in die Prüfinformation miteinbezogen ist.

Anschließend wird die synchronisationsrelevante Nachricht N mit einer Empfangszeitinformation t_{SE}, t_{ME} über die folgenden Schichten MAC, IP, UDP an das Precision Time Protocol PTP in der Applikationsschicht APPS weitergeleitet. Dort wird je nach übermittelter Empfangszeitinformation t_{SE}, t_{ME} entweder die zeitliche Abweichung t_{A} zur Uhr des Masters oder die Laufzeit t_{L} im Internet IN ermittelt - siehe auch Figur 3. Damit die Applikationsschicht APPS zur Integritätsprüfung den Hash-Wert berechnen und vergleichen kann, setzt sie zuvor die von der Empfangseinheit modifizierten reservierten Felder auf die ursprünglichen Werte zurück.

Für das Beispiel in Figur 1B sei wie bei Figur 1A Für 1B 1A angenommen, dass gemäß IEEE- Standard 1588 von dem Master M eine Synchronisationsnachricht SYN-N an den Slave S oder eine Anforderungsnachricht DREQ-N vom Slave S an den Master M gesendet wird - siehe Figur 3 -, wobei in beiden Fällen in der physikalischen Schicht PH im Master M oder Slave S mit Hilfe der Time Stamp Einheit TU der Sendezeitpunkt ermittelt und eine Sendezeitinformation t_{ST}, t_{MT} gebildet wird. Der Sendezeitpunkts wird so nah als möglich an dem Übertragungsmedium des Internet IN - bzw. einem das Internet IN repräsentierenden Ethernet - gemessen, um eine möglichst genaue Ermittlung der Abweichungen t_{A} der Uhren von Master M und den Slaves S sowie der Laufzeiten t_{L} von synchronisationsrelevanten Nachrichten N im Internet IN durchführen zu können.

In dem Beispiel wird die Sendezeitinformation t_{ST}, t_{MT} nicht in der physikalischen Schicht PH gespeichert, sondern direkt oder nach einer kurzen zwischenspeicherung an das Precision Time Protocol PTP in der betroffenen Applikation APP weitergeleitet und dort in der Applikation APP bzw. dem Applikationsprogramm bis zur Ermittlung der Abweichungen t_{A} der Uhren von Master M sowie der Laufzeiten t_{L} von synchronisationsrelevanten Nachrichten N im Internet IN bzw. Ethernet zwischengespeichert - in Figur 1B durch einen mit t_{ST}, t_{MT} bezeichneten, gestrichelten Pfeil angedeutet.

Die Erfindung ist nicht auf das Ausführungsbeispiel begrenzt, sondern kann auch in Kommunikationsnetzen eingesetzt werden, bei denen gemäß dem IEEE- Standard 1588 ein Boundary Clock Konzept - insbesondere Einbeziehung von Routern im Kommunikationsnetz - vorgesehen ist und auch in Kommunikationsnetzen eingesetzt werden, bei denen synchronisationsrelevante Nachrichten für zumindest den Abgleichung der Uhren in den Komponenten eines Kommunikationsnetzes übermittelt werden. Hierbei sind in den synchronisationsrelevanten Nachrichten nicht benutzte oder für weitere Anwendungen vorgesehene Nachrichtenteile für das Einfügen der Empfangszeitinformation zu verwenden.

## Patentansprüche

1. Verfahren zum Übermitteln einer Empfangszeitinformation (t_{SE}, t_{ME}), die beim Empfang einer synchronisationsrelevanten Nachricht (N) in oder bei einer physikalischen Schicht (PH) einer Einrichtung (M,S) gebildet wird,
- wobei die gebildete Empfangszeitinformation (t_{SE}, t_{ME}) derart in oder an die empfangene Nachricht (N) eingefügt oder angefügt und weitergeleitet wird,
- dass die Empfangszeitinformation (t_{SE}, t_{ME}) von zumindest einer Synchronisationsapplikation (PTP) der Einrichtung (M,S) empfangen werden kann, **dadurch gekennzeichnet,**
- **dass** für das Einfügen der Empfangszeitinformation (t_{SE}, t_{ME}) ein nicht benutzter Teil oder ein für weitere Informationen reservierter Teil der Nachricht (N) derart vorgesehen ist, dass die Empfangszeitinformation (t_{SE}, t_{ME}) bei der gemäß des IEEE Standards 1588 gebildeten synchronisationsrelevanten Nachricht (N) in die für weitere Informationen reservierten vier Bytes Nr. 78 bis 81 der Nachricht eingefügt wird,
- **dass** vor dem Weiterleiten der synchronisationsrelevanten Nachricht (N) an eine Applikation (APP) in der Synchronisationsapplikation (PTP) die Prüfinformation (pi) bzw. der Hash-Wert (H) zu löschen ist, wobei die Prüfung der übermittelten synchronisationsrelevanten Information (N) in der physikalischen Schicht (PH) erfolgt,
- **dass** in der Synchronisationsapplikation (PTP) durch Auswertung der in der Nachricht (N) übermittelten Empfangszeitinformation (t_{SE}, t_{ME}) die ursprüngliche Empfangszeitinformation (t_{SE}, t_{ME}) ermittelt wird, und
- **dass** die in der physikalischen Schicht (PH) gebildete Empfangszeitinformation (t_{SE}, t_{ME}) nicht in einem Speicher der physikalischen Schicht (PH) für einen Abruf durch die Synchronisationsapplikation (PTP) gespeichert wird (Fig. 1A).

2. Verfahren nach Anspruch 1, **dadurch gekennzeichnet,**
**dass** die zumindest eine Synchronisationsapplikation (PTP) in einer Applikationsschicht (APPS) die Empfangszeitinformation (t_{SE}, t_{ME}) empfängt.

3. Verfahren nach einem der Ansprüche 1 und 2, **dadurch gekennzeichnet,**
**dass** bei einer Empfangszeitinformation (t_{SE}, t_{ME}), die über eine Sekunde liegt, eine einen Sekundenbruchteil angebende Zeitinformation als Empfangszeitinformation (t_{SE}, t_{ME}) in die Nachricht (N) eingefügt wird.

4. Verfahren nach einem der Ansprüche 1 bis 3, **dadurch gekennzeichnet,**
**dass** zumindest eine in der Nachricht (N) übermittelte, aus einem die Empfangszeitinformation (t_{SE}, t_{ME}) umfassenden Teil der Nachricht (N) und/oder aus der vollständigen Nachricht (N) gebildete Prüfinformation (pi) nach einer Integritätsprüfung beim Einfügen der Empfangszeitinformation (t_{SE}, t_{ME}) gelöscht wird.

5. Verfahren nach einem der Ansprüche 1 bis 3, **dadurch gekennzeichnet,**
**dass** eine zumindest eine in der Nachricht (N) übermittelte, aus einem die Empfangszeitinformation (t_{SE}, t_{ME}) umfassenden Teil der Nachricht (N) und/oder aus der vollständigen Nachricht (N) gebildete Prüfinformation (pi) nach dem Einfügen der Empfangszeitinformation (t_{SE}, t_{ME}) aktualisiert wird.

6. Verfahren nach einem der vorhergehenden Ansprüche, **dadurch gekennzeichnet,**
**dass** die Empfangszeitinformation (t_{SE}, t_{ME}) durch eine Time Stamp Information nach einem Precision Time Protocol gemäß dem IEEE- Standard 1588 gebildet und übermittelt wird, wobei die synchronisationsrelevanten Nachrichten (N) durch
- eine Syn Nachricht (SYN-N),
- eine FollowUp Nachricht (FUP-N),
- eine DelayRequest Nachricht (DREQ-N) und
- eine DelayResponse Nachricht (DRES-N)
repräsentiert sind.

7. Einrichtung zum Übermitteln einer Empfangszeitinformation (t_{SE}, t_{ME}), wobei die Einrichtung derart ausgestaltet ist,
- dass die Einrichtung die Empfangszeitinformation (t_{SE}, t_{ME}) in oder bei einer physikalischen Schicht (PH) beim Empfang einer Nachricht (N) bildet,
- wobei die Einrichtung die gebildete Empfangszeitinformation (t_{SE}, t_{ME}) in die Nachricht (N) einfügt oder an die Nachricht (N) anfügt, und
- wobei die Einrichtung die Nachricht (N) an zumindest eine Synchronisationsapplikation (PTP) der Einrichtung (M,S) weiterleitet, **dadurch gekennzeichnet,**
- **dass** für das Einfügen der Empfangszeitinformation (t_{SE}, t_{ME}) ein nicht benutzter Teil oder ein für weitere Informationen reservierter Teil der Nachricht (N) derart vorgesehen ist, dass die Empfangszeitinformation (t_{SE}, t_{ME}) bei der gemäß des IEEE Standards 1588 gebildeten synchronisationsrelevanten Nachricht (N) in die für weitere Informationen reservierten vier Bytes Nr. 78 bis 81 der Nachricht eingefügt wird, dass vor dem Weiterleiten der synchronisationsrelevanten Nachricht (N) an eine Applikation (APP) in der Synchronisationsapplikation (PTP) die Prüfinformation (pi) bzw. der Hash-Wert (H) zu löschen ist, wobei die Prüfung der übermittelten synchronisationsrelevanten Information (N) in der physikalischen Schicht (PH) erfolgt,
- **dass** in der Synchronisationsapplikation (PTP) durch Auswertung der in der Nachricht (N) übermittelten Empfangszeitinformation (t_{SE}, t_{ME}) die ursprüngliche Empfangszeitinformation (t_{SE}, t_{ME}) ermittelt wird, und
- **dass** die in der physikalischen Schicht (PH) gebildete Empfangszeitinformation (t_{SE}, t_{ME}) nicht in einem Speicher der physikalischen Schicht (PH) für einen Abruf durch die Synchronisationsapplikation (PTP) gespeichert wird (Fig. 1A).

8. Einrichtung nach Anspruch 7, **dadurch gekennzeichnet,**
**dass** für das Bilden einer Empfangszeitinformation (t_{SE}, t_{ME}), das Einfügen der Empfangszeitinformation (t_{SE}, t_{ME}) und das Weiterleiten der Nachricht (N) an zumindest eine Synchronisationsapplikation (PTP) eine Time Stamp Einheit (TU) in oder bei einer physikalischen Schicht (PH) der Einrichtung (M,S) vorgesehen ist, und dass die zumindest eine Synchronisationsapplikation (PTP) in einer Applikationsschicht (APPS) der Einrichtung (M,S) realisiert ist.

9. Einrichtung nach einem der Ansprüche 7 oder 8, **dadurch gekennzeichnet,**
**dass** die Einrichtung (M,S) oder eine Time Stamp Einheit (TU) der Einrichtung (M,S) zum Einfügen der Empfangszeitinformation (t_{SE}, t_{ME}) in einen nicht benutzten Teil oder einen für weitere Informationen reservierten Teil (RF) der Nachricht (N) ausgestaltet ist.

10. Einrichtung nach einem der Ansprüche 8 oder 9, **dadurch gekennzeichnet,**
**dass** die Einrichtung (M,S) oder die Time Stamp Einheit (TU) zum Prüfen der Integrität zumindest einer in der Nachricht (N) übermittelten Prüfinformation (pi,H) und anschließend zum Löschen der Prüfinformation (pi,H) ausgestaltet ist.

11. Einrichtung nach einem der Ansprüche 8 oder 9, **dadurch gekennzeichnet,**
**dass** die Einrichtung (M,S) oder die Time Stamp Einheit (TU) zum Aktualisieren zumindest in der Nachricht (N) übermittelten Prüfinformation (pi,H) nach dem Einfügen der Empfangszeitinformation (t_{SE}, t_{ME}) ausgestaltet ist.

12. Einrichtung nach einem der Ansprüche 7 bis 11, **dadurch gekennzeichnet,**
**dass** die Einrichtung (M,S) oder die Time Stamp Einheit (TU) zum Bilden einer die Sendezeit- und die Empfangszeitinformation repräsentierende Time Stamp Information nach einem Precision Time Protocol gemäß IEEE-Standard 1588 ausgestaltet ist.

13. Einrichtung nach einem der Ansprüche 7 bis 12, **dadurch gekennzeichnet,**
**dass** die Einrichtung für das Empfangen von Nachrichten (N) von weiteren Einrichtungen (M,S) mit einem Kommunikationsnetz (KN) verbindbar ist, und
**dass** die Time Stamp Einheit (TU) in einer physikalischen Schicht (PH) oder zwischen der physikalischen Schicht (PH) und einer nachfolgenden Schicht der Einrichtung (M,S) angeordnet ist.

14. Einrichtung nach einem der Ansprüche 7 bis 13, **dadurch gekennzeichnet,**
**dass** bei einem als Internet realisierten Kommunikationsnetz (KN) die Time Stamp Einheit (TU) in der physikalischen Schicht (PH) der Einrichtung (M,S) angeordnet ist, und
**dass** die Einrichtung derart ausgestaltet ist, dass die Nachricht (N) mit der eingefügten Empfangszeitinformation (t_{SE}, t_{ME}) von der physikalischen Schicht (PH) an eine Medium Access Schicht (MAC) und über eine Internetprotokollschicht (IP) und eine Transportschicht (UDP) an eine programmtechnisch realisierte Applikation (APP) in der Applikationsschicht (APPS) übermittelt wird, wobei in der Applikation (APP) die Synchronisationsapplikation (PTP) realisiert ist.

15. Verwendung einer Time Stamp Einheit (TU) zum Übermitteln einer Empfangszeitinformation (t_{SE}, t_{ME}) für eine Einrichtung (M,S) nach einem der Ansprüche 7 bis 11 (Fig. 1A).

16. Verwendung einer Time Stamp Einheit (TU) nach Anspruch 15, **dadurch gekennzeichnet,**
**dass** schaltungstechnische Mittel zum Bilden einer die Empfangszeitinformation (t_{SE}, t_{ME},) repräsentierende Time Stamp Information nach einem Precision Time Protocol gemäß IEEE-Standard 1588 ausgestaltet sind.

17. Verwendung einer Time Stamp Einheit (TU) nach Ansprüchen 15 und 16, **dadurch gekennzeichnet,**
**dass** die Time Stamp Einheit (TU) in einem FPGA oder kundenspezifischen integrierten Schaltkreis realisiert ist.

## Claims

1. Method for transmitting reception-time information (t_{SE}, t_{ME}) which is formed upon receipt of a synchronisation-relevant message (N) in or at a physical layer (PH) of a device (M, S),
- wherein the reception-time information (t_{SE}, t_{ME}) formed is inserted in or appended to the received message (N) and forwarded such
- that the reception-time information (t_{SE}, t_{ME}) can be received by at least one synchronisation application (PTP) of the device (M, S), **characterised**
- **in that** to insert the reception-time information (t_{SE}, t_{ME}) an unused part or a part reserved for additional information of the message (N) is provided such that the reception-time information (t_{SE}, t_{ME}) is inserted into the four bytes nos. 78 to 81 of the message reserved for further information in the synchronisation-relevant message (N) in accordance with IEEE Standard 1588,
- **in that** before the synchronisation-relevant message (N) is forwarded to an application (APP) in the synchronisation application (PTP) the check information (pi) or the hash value (H) is to be deleted, wherein the checking of the transmitted synchronisation-relevant information (N) occurs in the physical layer (PH),
- **in that** in the synchronisation application (PTP), the original reception-time information (t_{SE}, t_{ME}) is determined by analysis of the reception-time information (t_{SE}, t_{ME}) transmitted in the message (N), and
- **in that** the reception-time information (t_{SE}, t_{ME}) formed in the physical layer (PH) is not saved in a memory of the physical layer (PH) for retrieval by the synchronisation application (PTP) (Fig. 1A).

2. Method according to claim 1, **characterised in that** the at least one synchronisation application (PTP) in an application layer (APPS) receives the reception-time information (t_{SE}, t_{ME}).

3. Method according to any one of claims 1 and 2 **characterised in that** in the case of reception-time information (t_{SE}, t_{ME}) of more than one second, time information indicating a fraction of a second is inserted into the message (N) as reception-time information (t_{SE}, t_{ME}).

4. Method according to any one of claims 1 to 3 **characterised in that** at least one check information (pi) formed from a part, containing the reception-time information (t_{SE}, t_{ME}), of the message (N) and / or from the complete message (N) is deleted after an integrity check upon insertion of the reception-time information (t_{SE}, t_{ME}).

5. Method according to any one of claims 1 to 3 **characterised in that** at least one item of check information (pi) formed from a part, containing the reception-time information (t_{SE}, t_{ME}), of the message (N) and / or from the complete message (N) is updated after the insertion of the reception-time information (t_{SE}, t_{ME}).

6. Method according to any one of the previous claims **characterised in that** the reception-time information (t_{SE}, t_{ME}) is formed and transmitted by time-stamp information according to a precision time protocol to the IEEE Standard 1588, wherein the synchronisation-relevant messages (N) are represented by
- a Syn message (SYN-N),
- a FollowUp message (FUP-N),
- a DelayRequest message (DREQ-N) and
- a DelayResponse message (DRES-N).

7. Device for transmitting reception-time information (t_{SE}, t_{ME}), wherein the device is designed such
- that the device forms the reception-time information (t_{SE}, t_{ME}) in or at a physical layer (PH) upon receipt of a message (N),
- wherein the device inserts the reception-time information (t_{SE}, t_{ME}) formed into the message (N) or appends it to the message (N), and
- wherein the device forwards the message (N) to at least one synchronisation application (PTP) of the device (M, S), **characterised**
- **in that** to insert the reception-time information (t_{SE}, t_{ME}) an unused part or a part reserved for additional information of the message (N) is provided such that the reception-time information (t_{SE}, t_{ME}) is inserted into the four bytes nos. 78 to 81 of the message reserved for further information in the synchronisation-relevant message (N) in accordance with the IEEE Standard 1588,
**in that** before the synchronisation-relevant message (N) is forwarded to an application (APP) in the synchronisation application (PTP) the check information (pi) or the hash value (H) is to be deleted, wherein the checking of the transmitted synchronisation-relevant information (N) occurs in the physical layer (PH),
- **in that** in the synchronisation application (PTP), the original reception-time information (t_{SE}, t_{ME}) is determined by analysis of the reception-time information (t_{SE}, t_{ME}) transmitted in the message (N), and
- **in that** the reception-time information (t_{SE}, t_{ME}) formed in the physical layer (PH) is not saved in a memory of the physical layer (PH) for retrieval by the synchronisation application (PTP) (Fig. 1A).

8. Device according to claim 7 **characterised in that**, to form reception-time information (t_{SE}, t_{ME}), the insertion of the reception-time information (t_{SE}, t_{ME}) and the forwarding of the message (N) to at least one synchronisation application (PTP), a time stamp unit (TU) in or at a physical layer (PH) of the device (M, S) is provided, and **in that** the at least one synchronisation application (PTP) is implemented in an application layer (APPS) of the device (M, S).

9. Device according to any one of claims 7 or 8 **characterised in that** the device (M, S) or a time stamp unit (TU) of the device (M, S) is designed to insert the reception-time information (t_{SE}, t_{ME}) in an unused part or a part (RF) reserved for additional information of the message (N).

10. Device according to any one of claims 8 or 9 **characterised in that** the device (M, S) or the time stamp unit (TU) is designed to check the integrity of at least one check information (pi, H) transmitted in the message (N) and then to delete the check information (pi, H).

11. Device according to any one of claims 8 or 9 **characterised in that** the device (M, S) or the time stamp unit (TU) is designed to update at least check information (pi, H) transmitted in the message (N) following the insertion of the reception-time information (t_{SE}, t_{ME}).

12. Device according to any one of claims 7 or 11 **characterised in that** the device (M, S) or the time stamp unit (TU) is designed to form time stamp information representing the send time and the reception time information according to a precision time protocol in accordance with IEEE Standard 1588.

13. Device according to any one of claims 7 to 12 **characterised in that** the device for the reception of messages (N) from other devices (M, S) can be connected to a communications network (KN), and **in that** the time stamp unit (TU) is disposed in a physical layer (PH) or between the physical layer (PH) and a subsequent layer of the device (M, S).

14. Device according to any one of claims 7 to 13 **characterised in that** in the case of a communications network (KN) implemented as the internet, the time stamp unit (TU) is disposed in the physical layer (PH) of the device (M, S), and **in that** the device is designed such that the message (N) is transmitted with the inserted reception-time information (t_{SE}, t_{ME}) from the physical layer (PH) to a medium access layer (MAC) and by means of an internet protocol layer (IP) and a transport layer (UDP) to an implemented application (APP) in the application layer (APPS), wherein the synchronisation application (PTP) is implemented in the application (APP).

15. Use of a time stamp unit (TU) for the transmission of reception-time information (t_{SE}, t_{ME}) for a device (M, S) according to any one of claims 7 to 11 (Fig. 1A).

16. Use of a time stamp unit (TU) according to claim 15 **characterised in that** circuit-design means are designed to form time stamp information representing the reception-time information (t_{SE}, t_{ME}) in accordance with a precision time protocol to IEEE Standard 1588.

17. Use of a time stamp unit (TU) according to claims 15 and 16 **characterised in that** the time stamp unit (TU) is implemented in an FPGA or customer-specific integrated circuit.

## Revendications

1. Procédé servant à transmettre une information relative à l'heure de réception (t_{SE}, T_{ME}) qui est formée lors de la réception d'un message (N) pertinent pour la synchronisation dans ou sur une couche physique (PH) d'un dispositif (M, S),
- sachant que l'information relative à l'heure de réception (t_{SE}, t_{ME}) formée est insérée ou jointe dans ou au niveau du message reçu (N) et est transférée,
- sachant que l'information relative à l'heure de réception (t_{SE}, t_{ME}) peut être reçue par au moins une application de synchronisation (PTP) du dispositif (M, S), **caractérisé en ce**
- **que** pour l'insertion de l'information relative à l'heure de réception (t_{SE}, t_{ME}), on prévoit une partie non utilisée du message (N) ou une partie réservée à d'autres informations du message (N) de telle manière que l'information relative à l'heure de réception (t_{SE}, t_{ME}) est insérée dans le cas du message (N) pertinent pour la synchronisation formé selon le protocole normalisé IEEE 1588 dans les quatre multiplets n° 78 à 81 du message réservés à d'autres informations,
- **qu'**avant le transfert du message (N) pertinent pour la synchronisation à une application (APP), l'information de contrôle (pi) ou la valeur de hachage (H) sont à supprimer dans l'application de synchronisation (PTP), sachant que le contrôle de l'information (N) pertinente pour la synchronisation transmise est effectué dans la couche physique (PH),
- **que** l'information d'origine relative à l'heure de réception (t_{SE}, t_{ME}) est déterminée dans l'application de synchronisation (PTP) en évaluant l'information relative à l'heure de réception (t_{SE}, t_{ME}) transmise dans le message (N), et
- **que** l'information relative à l'heure de réception (t_{SE}, t_{ME}) formée dans la couche physique (PH) n'est pas mémorisée dans une mémoire de la couche physique (PH) pour un appel par l'application de synchronisation (PTP) (figure 1A).

2. Procédé selon la revendication 1, **caractérisé en ce que** l'application de synchronisation (PTP) au moins au nombre de une reçoit dans une couche d'application (APPS) l'information relative à l'heure de réception (t_{SE}, t_{ME}).

3. Procédé selon l'une quelconque des revendications 1 et 2, **caractérisé en ce**
**que** dans le cas d'une information relative à l'heure de réception (t_{SE}, t_{ME}), dont la durée est supérieure à une seconde, une information relative à l'heure indiquant une fraction de seconde est insérée en tant qu'information relative à l'heure de réception (t_{SE}, t_{ME}) dans le message (N).

4. Procédé selon l'une quelconque des revendications 1 à 3, **caractérisé en ce**
**qu'**au moins une information de contrôle (pi) transmise dans le message (N), formée à partir d'une partie du message (N) comportant l'information relative à l'heure de réception (t_{SE}, t_{ME}) et/ou à partir du message complet (N) est supprimée après un contrôle d'intégrité lors de l'insertion de l'information relative à l'heure de réception (t_{SE}, t_{ME}).

5. Procédé selon l'une quelconque des revendications 1 à 3, **caractérisé en ce**
**qu'**au moins une information de contrôle (pi) transmise dans le message (N), formée à partir d'une partie du message (N) comportant l'information relative à l'heure de réception (t_{SE}, t_{ME}) et/ou à partir du message (N) complet est mise à jour après l'insertion de l'information relative à l'heure de réception (t_{SE}, t_{ME}).

6. Procédé selon l'une quelconque des revendications précédentes, **caractérisé en ce**
**que** l'information relative à l'heure de réception (t_{SE}, t_{ME}) est formée et est transmise par une Time Stamp Information selon un protocole PTP [Precision Time Protocol - protocole de précision temporelle] normalisé IEEE 1588, sachant que les messages (N) pertinents pour la synchronisation sont représentés par
- un message Syn, ou message de synchronisation (SYN-N),
- un message FollowUp, ou message de suivi (FUP-N),
- un message DelayRequest, ou message de demande de délai (DREQ-N),
- un message DelayResponse, ou message de réponse de délai (DRES-N).

7. Dispositif servant à transmettre une information relative à l'heure de réception (t_{SE}, t_{ME}), sachant que le dispositif est configuré de telle manière
- que le dispositif forme l'information relative à l'heure de réception (t_{SE}, t_{ME}) dans ou sur une couche physique (PH) lors de la réception d'un message (N),
- sachant que le dispositif insère l'information relative à l'heure de réception (t_{SE}, t_{ME}) formée dans le message (N) ou joint cette dernière au message (N), et
- sachant que le dispositif transfère le message (N) à au moins une application de synchronisation (PTP) du dispositif (M, S), **caractérisé en ce**
- **que** pour l'insertion de l'information relative à l'heure de réception (t_{SE}, t_{ME}), on prévoit une partie du message non utilisée (N) ou une partie réservée à d'autres informations du message (N) de telle manière que l'information relative à l'heure de réception (t_{SE}, t_{ME}) est insérée dans le cas du message (N) pertinent pour la synchronisation formé selon la norme IEEE 1588, dans quatre multiplets n° 78 à 81 du message (N) réservés à d'autres informations,
et **qu'**avant le transfert du message (N) pertinent pour la synchronisation à une application (APP), l'information de contrôle (pi) ou la valeur de hachage (H) sont à supprimer dans l'application de synchronisation (PTP), sachant que le contrôle de l'information (N) pertinente pour la synchronisation transmise est effectuée dans la couche physique (PH),
- **que** l'information relative à l'heure de réception (t_{SE}, t_{ME}) est déterminée dans l'application de synchronisation (PTP) en évaluant l'information relative à l'heure de réception (t_{SE}, t_{ME}) transmise dans le message (N), et
- **que** l'information relative à l'heure de réception (t_{SE}, t_{ME}) formée dans la couche physique (PH) n'est pas mémorisée dans une mémoire de la couche physique (PH) pour un appel par l'application de synchronisation (PTP) (figure 1A).

8. Dispositif selon la revendication 7, **caractérisé en ce que** pour former une information relative à l'heure de réception (t_{SE}, t_{ME}), pour insérer l'information relative à l'heure de réception (t_{SE}, t_{ME}) et pour transférer le message (N) à au moins une application de synchronisation (PTP), une unité Time Stamp (unité d'horodatage) (TU) est prévue dans ou sur une couche physique (PH) du dispositif (M, S), et **en ce que** l'application de synchronisation (PTP) au moins au nombre de une est réalisée dans une couche d'application (APPS) du dispositif (M, S).

9. Dispositif selon l'une quelconque des revendications 7 ou 8, **caractérisé en ce**
**que** le dispositif (M, S) ou une unité Time Stamp (TU) du dispositif (M, S) sont configurés pour insérer l'information relative à l'heure de réception (t_{SE}, t_{ME}) dans une partie non utilisée du message (N) ou dans une partie réservée à d'autres informations (RF) du message (N).

10. Dispositif selon l'une quelconque des revendications 8 ou 9, **caractérisé en ce**
**que** le dispositif (M, S) ou l'unité Time Stamp (TU) sont configurés pour contrôler l'intégrité d'au moins une information de contrôle (pi, H) transmise dans le message (N) avant de supprimer ladite information de contrôle (pi, H).

11. Dispositif selon l'une quelconque des revendications 8 ou 9, **caractérisé en ce**
**que** le dispositif (M, S) ou l'unité Time Stamp (TU) sont configurés pour mettre à jour au moins l'information de contrôle (pi, H) transmise dans le message (N) après l'insertion de l'information relative à l'heure de réception (t_{SE}, t_{ME}).

12. Dispositif selon l'une quelconque des revendications 7 à 11, **caractérisé en ce**
**que** le dispositif (M, S) ou l'unité Time Stamp (TU) sont configurés pour former une information Time Stamp représentant l'information relative à l'heure d'envoi ou à l'heure de réception selon un protocole PTP normalisé IEEE 1588.

13. Dispositif selon l'une quelconque des revendications 7 à 12, **caractérisé en ce**
**que** le dispositif peut être relié à un réseau de communication (KN) pour recevoir des messages (N) en provenance d'autres dispositifs (M, S), et
en ce que l'unité Time Stamp (TU) est disposée dans une couche physique (PH) ou entre la couche physique (PH) et une couche suivante du dispositif (M, S).

14. Dispositif selon l'une quelconque des revendications 7 à 13, **caractérisé en ce**
**que** dans le cas d'un réseau de communication (KN) réalisé comme Internet, l'unité Time Stamp (TU) est disposée dans la couche physique (PH) du dispositif (M, S), et en ce que le dispositif est configuré de telle manière que le message (N) comportant l'information relative à l'heure de réception (t_{SE}, t_{ME}) insérée est transmis de la couche physique (PH) à une couche Medium Access (MAC) et par l'intermédiaire d'une couche de protocole Internet (IP) et d'une couche de transport (UDP) à une application (APP) réalisée selon la technique de programmation dans la couche d'application (APPS), sachant que l'application de synchronisation (PTP) est réalisée dans l'application (APP).

15. Utilisation d'une unité Time Stamp (TU) servant à transmettre une information relative à l'heure de réception (t_{SE}, t_{ME}) pour un dispositif (M, S) selon l'une quelconque des revendications 7 à 11 (figure 1A).

16. Utilisation d'une unité Time Stamp (TU) selon la revendication 15, **caractérisée en ce**
**que** des moyens relevant de la technique des circuits sont configurés pour former une information Time Stamp représentant l'information relative à l'heure de réception (t_{SE}, t_{ME}) selon un protocole PTP normalisé IEEE 1588.

17. Utilisation d'une unité Time Stamp (TU) selon les revendications 15 et 16, **caractérisée en ce que** l'unité Time Stamp (TU) est réalisée dans un FPGA [field-programmable gate array - réseau de portes programmables] ou dans un circuit intégré propre au client.
